(19) Europäisches Patentamt
European Patent Office
Office européen des brevets

(11) Veröffentlichungsnummer : **0 321 517 B1**

## (12) EUROPÄISCHE PATENTSCHRIFT

(45) Veröffentlichungstag der Patentschrift :
26.08.92 Patentblatt 92/35

(51) Int. Cl.⁵ : **A61C 9/00**

(21) Anmeldenummer : **88905171.0**

(22) Anmeldetag : **20.06.88**

(86) Internationale Anmeldenummer :
**PCT/CH88/00109**

(87) Internationale Veröffentlichungsnummer :
**WO 88/10101 29.12.88 Gazette 88/28**

(54) SOCKELPLATTE FÜR EIN ARBEITSMODELL UND SORTIMENT SOLCHER SOCKELPLATTEN.

(30) Priorität : **19.06.87 CH 2313/87**

(43) Veröffentlichungstag der Anmeldung :
28.06.89 Patentblatt 89/26

(45) Bekanntmachung des Hinweises auf die
Patenterteilung :
26.08.92 Patentblatt 92/35

(84) Benannte Vertragsstaaten :
**AT BE CH DE FR GB IT LI NL SE**

(56) Entgegenhaltungen :
EP-A- 0 030 312
EP-A- 0 176 944

(73) Patentinhaber : **WOHLWEND, Arnold**
**Gartenstrasse 5**
**CH-8903 Birmensdorf (CH)**

(72) Erfinder : **WOHLWEND, Arnold**
**Gartenstrasse 5**
**CH-8903 Birmensdorf (CH)**

(74) Vertreter : **Büchel, Kurt F., Dr.**
**Bergstrasse 297**
**FL-9495 Triesen (LI)**

**Beschreibung**

Die Erfindung betrifft eine vorgefertigte Sockelplatte für ein Arbeitsmodell nach dem Oberbegriff des Anspruches 1 und ein Sortiment solcher Sockelplatten.

Eine Sockelplatte nach dem ersten Teil von Anspruch 1 ist aus der EP-A-0 176 944 bekannt.

Als Arbeitsmodell ist jedes Modell eines Objektes zu verstehen, das durch Ausgiessen eines Abdruckes von dem Objekt entstanden ist. Derartige Arbeitsmodelle kommen häufig in der Medizintechnik, insbesondere in der Zahntechnik, aber auch in anderen Bereichen, wie insbesondere in der Schmuckindustrie, aber auch in der Archäologie usw. vor. In all diesen Bereichen wird oft die Forderung gestellt, das Arbeitsmodell zu zerteilen, um Detailarbeitsmodelle zu erhalten, an denen dann Arbeiten, beispielsweise Verbesserungen, oder wie im Zahnbereich das Herstellen von Kronen, Brücken, Inlays usw. durchgeführt werden sollen. Speziell bei diesen Vorgängen müssen die Detailarbeitsmodelle oftmals den verschiedensten Behandlungen unterzogen und darüber hinaus dem Techniker von allen Seiten optimal zugänglich gemacht werden. Dies erfordert eine geeignete Teilung, bzw. Führung der Detailarbeitsmodelle relativ zu dem Gesamtarbeitsmodell, so dass die Detailarbeitsmodelle jederzeit wieder mit dem Gesamtarbeitsmodell vereinigt werden können, ohne dass es zu örtlichen Relativverschiebungen kommen kann.

Im folgenden wird der Stand der Technik hauptsächlich für den zahntechnischen Bereich dargelegt, der wohl der bedeutendste und bestdokumentierte der oben erwähnten Anwendungsbereiche ist. Bei einem bekannten Verfahren - Pindexsystem - wird ein Abdruck, der vom Zahnarzt von den Zahnreihen aus dem Munde eines Patienten genommen wird, mit Gips ausgegossen. Nach dem Abhärten des daraus entstehenden Gipskranzes wird dieser an allen Seiten und auf der den Zähnen gegenüberliegenden Seite plan zugeschliffen. beschliessend wird der Zahnkranz an der letztgenannten Seite mit einzelnen Bohrlöchern versehen, die in den Bereich der Kaufläche der zu bearbeitenden Zähne zielen, wobei eine Bohrmaschine nötig ist. Problematisch dabei ist das Halten des Zahnkranzes. Ausserdem muss erst das Erhärten des Gipses abgewartet werden. Das Bohren verursacht darüberhinaus Lärm und Gipsstaub. In die Bohrlöcher werden sodann Metallstifte (Pins) eingeklebt. Die von Löchern bzw. Pins freie Unterseite des Zahnkranzes wird sodann mit einem Trennmittel bestrichen.

Nun wird in einer eigenen Form eine Sockelplatte aus Gips hergestellt, in die in deren noch teigigem Zustand der Zahnkranz mit den Pins gedrückt wird. Nach dem Aushärten der Sokkelplatte kann der Zahnkranz abgenommen werden. In der Sokkelplatte verbleiben die Abdrücke der Pins, die sodann als Lagefixierung für den Zahnkranz oder Teile davon dienen. Der Zahnkranz wird nämlich zwischen den Pins zersägt, wodurch somit einzelne Detailmodelle bzw. Segmente erzielt werden. Diese Detailarbeitsmodelle können abnehmbar in dem Gipssockel fixiert werden. Störend ist, dass sich die Bohrungen in dem Gipssockel häufig mit Gipsstaub füllen, bzw. durch die Pins ausgeschabt werden, so dass häufig die Positionierung nicht mehr lagerichtig erfolgen kann.

Störend ist darüber hinaus, dass sich die Detailarbeitsmodelle jeweils nur in dem Gipssockel aufrecht halten. Neben dem Gipssockel können die Detailmodelle infolge der herausragenden Pins jeweils nur gelegt, nicht aber senkrecht gestellt werden. Diesen Umstand kann auch eine der modernsten Methoden zur Herstellung von Arbeitsmodellen, das sogenannte Zeiser-Modellsystem, nicht verhindern. Bei dieser Methode wird eine vorgefertigte Sockelplatte aus Kunststoff verwendet. Die Pins sind ebenso wie beim Pindexverfahren im fertigen Zustand des Arbeitsmodelles festhaftend mit dem Arbeitsmodell verbunden, indem sie zuerst in Bohrungen gesteckt werden, die individuell in die Sockelplatte eingearbeitet wurden, während sie in den später aushärtenden Werkstoff des Zahnkranzes eingetaucht werden. Bei diesem Verfahren, das sich in der Praxis bereits durchgesetzt hat, entfällt das zeitraubende Angipsen der Sockelplatte, sowie das bebohren des Zahnkranzes. Das individuelle Einbringen der Bohrungen in die Sockelplatte ist jedoch für sich wiederum ein sehr komplizierter Arbeitsvorgang, der eine aufwendige Maschinerie erfordert: Ein spezielles Bohrgerät mit einem ebenso aufwendigen Führungsapparat mit einem Markierungsstift wird benötigt, um im Bereich der jeweiligen Mitte der Kaufläche die Bohrungen für die Pins in die Sockelplatte zu bohren. Folgende Arbeitsschritte sind dabei nötig:

1. Die Sockelplatte muss auf dem Bohrgerät bzw. Markierungsgerät fixiert werden.

2. Ein Abdruck wird auf diese Sockelplatte gelegt und dort befestigt.

3. Mit dem Markierungsstift wird im Abdruck die Stelle ausgewählt, wo ein Pin plaziert werden soll.

4. An der analogen Stelle in der Sockelplatte wird nun mittels einer Bohrmaschine ein konisches Loch gebohrt.

5. Die Vorgänge 3. und 4. werden entsprechend der Anzahl der nötigen Pins (ca. 2 Stück pro Segment, bzw. Detailarbeitsmodell) wiederholt.

Die Bohrungen dieser Löcher entsprechen in der Grösse und im Durchmesser den Pins, die mit dem System geliefert werden. Lärm- und Staubentwicklung durch das Bohren sind auch hier gegeben. Die Pins werden sodann in die Sockelplatte eingesetzt. An ihrer Oberseite sind sie etwas aufgerauht oder mit Einkerbungen versehen. Nach dem Ausgiessen des Abdruckes mit Gips wird die Sockelplatte mit den eingesteckten Pins wie beim Pindexverfahren in den noch weichen Gips gedrückt. Nach dem Abhärten des Gipses und Abziehen des Abdruckes kann der Zahnkranz durch Zersägen zwischen den Pins in einzelne Segmente unterteilt werden.

Dem Zeiser-Modellsystem wird als Vorteil gegenüber dem Pindexverfahren zugeschrieben, dass eine höhere Präzision erzielt werden kann, bei gleichzeitiger Kostenreduktion um 35%. Die Erreichung der Präzision ist jedoch - wie schon oben angeführt - an die Verwendung einer sehr aufwendigen Bohrmaschine mit Führungsmechanismus gebunden, die sehr teuer ist und einen Gutteil der Kosteneinsparung gegenüber dem Pindexsystem wieder wettmacht. Jede Sockelplatte ist nur einmal zu verwenden und fällt dann als schwer entsorgbarer Kunststoffabfall an. In der DE-OS 2949697, die dem Zeiser-Modellsystem zugrunde liegt, ist zwar auch erwähnt, die (individuell gesetzten) Pins in der Sockelplatte starr zu verankern, jedoch ist keine Lösung aufgezeigt, wie diese Verankerung die oben erwähnten Probleme beseitigen soll.

Der Erfindung liegt demzufolge die Aufgabe zugrunde, eine Sockelplatte zu entwickeln, bei der auf die Bohrmaschine samt Führungsapparaten verzichtet werden kann, die eine hohe Präzision und darüber hinaus eine beliebige Wiederverwertung der Sockelplatte ermöglicht. Ausserdem sollen die notwendige Arbeitszeit zur Herstellung eines Arbeitsmodelles und die anteilsmässigen Materialkosten gegenüber den bekannten Verfahren weiter reduziert werden. Es soll sowohl bei den üblichen Objektsituationen als auch bei speziell geformten Objekten (Zahnanordnungen) ein erheblicher Zeitgewinn beim Herstellen der Arbeitsmodelle zu verzeichnen sein. Alle anderen oben beschriebenen Nachteile sollen vermieden werden.

Diese umfangreiche Aufgabenstellung wird durch bestechend einfache Massnahmen entsprechend dem Kennzeichen des Anspruches 1 in überraschender Weise umfassend gelöst. Vorteilhafte Ausführungsformen der Erfindung sind in den Kennzeichen der Unteransprüche beschrieben.

Erstmals ist es möglich, ohne vor Ort zu bohren, in kürzester Zeit ein fertiges Arbeitsmodell herzustellen, das darüber hinaus nicht wie alle bisherigen Modelle nach einmaliger Anwendung als Müll anfällt. Eine mit starr verankerten Pins versehene, vorgefertigte Sockelplatte ist so aufgebaut, dass grössere Pins im Randbereich der Sockelplatte und kleinere Pins im Bereich zur Mitte der Platte plaziert sind. In einer vorteilhaften Ausführung sind die Pins nicht wie bei der bekannten Methode im Bereich der Zahnmitte plaziert, sondern etwa im Interdental-Bereich zwischen jeweils zwei Zähnen. Die nach unten stets offenen Löcher befinden sich im Modell bzw. Detailarbeitsmodell; bedingt durch die Schwerkraft können sich somit keine Verunreinigungen in den Pinlöchern ablagern. Nach dem Zerschneiden des Arbeitsmodelles in die Detailarbeitsmodelle sind die einzelnen Segmente durch die Pins an der Sockelplatte besser stabilisiert (seitliche Führung). Die Pins sind also nicht wie bei der vorgängig erwähnten Methode im Gipskranz befestigt, sondern in der Sockelplatte verankert. Dadurch können das Arbeitsmodell bzw. die Detailarbeitsmodelle auch senkrecht aufgestellt werden, da keine störenden Pins aus ihnen herausragen.

Der Erfindung liegt weiters eine empirisch erarbeitete Erkenntwis zugrunde, wonach die Mehrzahl aller Gebisse in je 3 Kategorien für den Oberkiefer und für den Unterkiefer eingeteilt werden können, so dass für ca. 30 % aller Europäer je Ober- oder Unterkiefer eine Sockelplatte ausreich, um ein geeignetes Zahnkrantmodell herzustellen. Wichtig ist dabei die Form des Zahnbogens und die Abstände der Pins, die ja vorteilhaft in den Interdentalräumen zu liegen kommen sollen.

Der Einfachheit halber werden für die Anwendung in Labors ein Sortiment von ca. 2 x 3 verschiedenen Grössen an Sockelplatten vorgesehen sein, die somit für fast alle Objektsituationen in der Zahntechnik verwendet werden können.

Für Arbeitsmodelle von Gebissen für Patienten mit unüblichen, z.B. übergrossen Zahndimensionen oder abweichenden Zahnstellungen ist erfindungsgemäss eine Sonderplatte (z.B. aus einem Sortiment von drei verschiedenen) vorgesehen, die zusätzlich zu den 2 x 3 verschiedenen Sockelplatten im Sortiment mitgeliefert werden kann, die auf der Zahnkranzseite mit einer Vielzahl von Pins versehen ist, oder Löcher im Abstand beispielsweise von 2 bis 4 mm aufweist. Eine solche Sonderplatte könnte im Extremfall auch als symmetrische Rasterplatte ausgebildet sein, auf der man durch Drehen bzw. Verschieben des Zahnkranzmodelles die für das jeweilig zu bearbeitende Detailmodellsegment richtige Position findet. Eine weitere Universalsockelplatte wäre eine ohne schon vorher befestigte Pins. Anstelle der Pins sind dort Bohrungen vorgesehen. Bei Verwendung einer Loch-Sockelplatte erfolgt die Anordnung der gewünschten Pins so, dass die Platte auf dem Abdruck z.B. mit einer Knetmasse fixiert wird, worauf die gewünschten Pinpositionen eingezeichnet werden können. Die Sockelplatte ist vorzugsweise durchsichtig, so dass die Positionen an ihrer Rückseite erkannt und markiert werden können. Die mitgelieferten Pins können nun an diesen eingezeichneten Positionen eingeklebt, eingeschraubt oder eingeschlagen werden. Die übrigen Löcher werden vor dem Ausgiessen des Abdruckes mit Gips mittels einer weichen Masse, z.B. mit Wachs oder Knetmasse, verschlossen. Entsprechend einer bevorzugten Ausführung können sie aber auch mit einer einseitig translucenten, selbstklebenden Folie überklebt werden, die dann vor dem Einsetzen der Pins auf die Platte geklebt wird und die Löcher bedeckt. Diese Folie könnte auch schon im Urzustand vorgesehen sein und würde dann lediglich an den Orten der Pins durch diese per-

EP 0 321 517 B1

foriert werden.

Weitere einem Fachmann leicht verständliche Vorteile ergeben sich durch die Ausgestaltungen der Merkmale in den Unteransprüchen, sowie aus der nachfolgenden Figurenbeschreibung. Es sei nochmals betont, dass das Wesen der Erfindung die Verankerung der Pins - in vollständiger Reihe, unabhängig von den zu bearbeitenden Modellsegmenten - in der Sockelplatte und nicht in den Arbeitsmodellen ist. Damit ist auch die Wiederverwendbarkeit gewährleistet. Diese Idee ist grundsätzlich neu, wie die jahrzehntealte Geschichte der Zahntechnik zeigt. Die Erfindung ist daher nicht auf die dargestellten Figuren oder Ausführungsbeispiele beschränkt, sondern hat darüber hinaus einen wesentlich breiteren Umfang. Es zeigen dabei

Fig.1 eine Sockelplatte in Sonderausführung für Aussernormgrössen mit angedeuteten Bohrungen und Pins für ein Arbeitsmodell eines Gebisses etwa in Originalgrösse;

Fig.2 einen Querschnitt durch eine bestimmte Grösse der Sockelplatte mit unterschiedlichen Pinformen;

Fig.3 den Verfahrensschritt des Einrichtens der Sockelplatte auf dem noch nicht mit Gips befüllten Abdruck;

Fig.4 ein fertiges Arbeitsmodell vor dem Zersägen, ähnlich dem Abdruck gemäss Fig. 3;

Fig.5 ein Detailarbeitsmodell auf einer erfindungsgemässen Sockelplatte; und

Fig.6 ein Arbeitsmodell gemäss dem Stand der Technik.

Gleiche Teile werden mit gleichen Ziffern, ähnliche Teile mit gleichen Ziffern und unterschiedlichen Indizes versehen, die Figuren werden im Zusammenhang beschrieben.

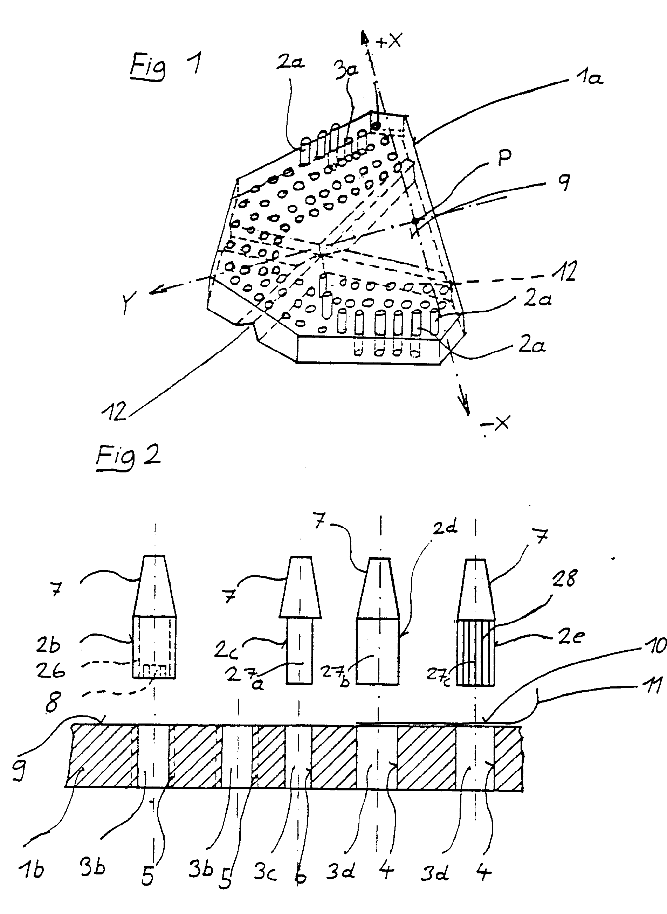

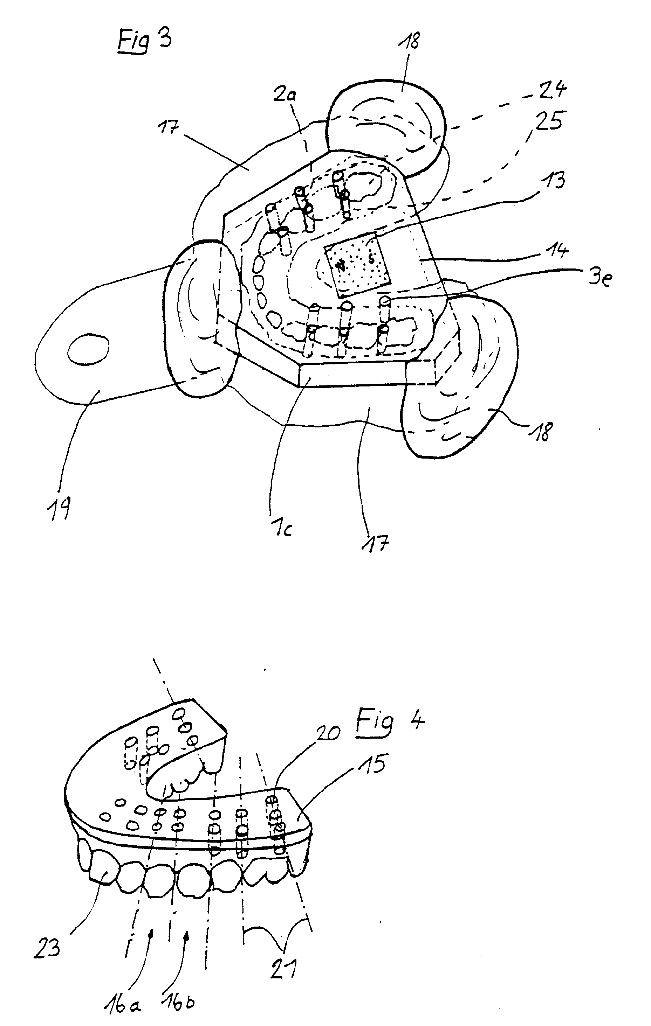

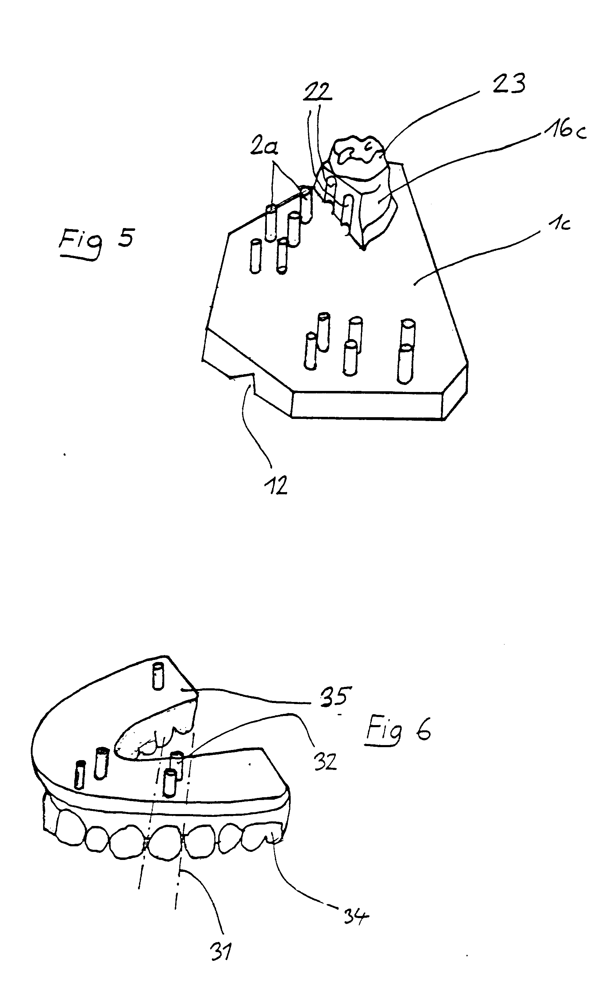

Das Wesen der Erfindung besteht in einer vorgefertigten Sokkelplatte 1, die dem Objekt, z.B. einer Zahnreihe (in diesem Fall polygonal) angepasst ist. Die Sockelplatte 1 verfügt prinzipiell über fix verankerte Pins 2 in Bohrungen 3, oder mit der Sockelplatte 1 einstückig - z.B. im Spritzgussverfahren hergestellt - ausgebildete Pins. Die Sockelplatte 1 ist an ihrer dem Arbeitsmodell zugewandten Fläche 9 zwischen den Pins plan und glatt ausgebildet. An ihrer Unterseite verfügt sie entweder über Rillen 12 (Fig. 1,5) mit trapezförmigem Querschnitt oder über Magnethaftsysteme 13 (Fig. 3), um z.B. in einem Artikulator verschiebesicher gehalten werden zu können. Die Magnetplatte 13 kann an der Unterseite 14 der Sokkelplatte 1c angegossen oder angeklebt sein. Vorteilhafterweise sind drei Magnetscheiben, in deckungsgleichen Bohrungen an der Unterseite versenkt, angeordnet. Es ist stets nur ein Teil der tatsächlich vorhandenen Pins, im Normalfall 16 x 2 pro Sockelplatte (2 x 8 Zähne, 2 Zahnreihen) dargestellt.

Die Aufgabe der Sockelplatte 1 ist es, mit den darin verankerten Pins 2 Führungen für das Arbeitsmodell 15 bzw. für das Detailmodell 16 zu bilden. Die Pins 2a sind dabei günstigerweise im Interdentalraum des Zahnkranzes, bzw. des Arbeitsmodelles angeordnet. Dies geschieht im wesentlichen durch Einrichten der durchsichtigen Sockelplatte 1c über einem Abdruck 17 (Fig.3); der Techniker sieht Bohrungen 3e bzw. die darin steckenden Pins 2a und kann die Sockelplatte durch leichtes Verschieben so einrichten, dass eben die Positionierung der Pins 2a im Interdentalraum geschieht. In dieser Lage wird die Sockelplatte 1c mittels einer knetbaren Masse 18 fixiert. Die knetbare Masse 18 bleibt formbeständig, so dass jederzeit die gleiche Lage der Sockelplatte 1c auf dem Abdruck 17 hergestellt werden kann. Zur besseren Handlichkeit verfügt der Abdruck 17 über einen Handgriff 19.

Nach dem Ausgiessen des Abdruckes mit Gips und dem Wiederaufsetzen der Sockelplatte mit Hilfe der knetbaren Masse 18 entsteht das Arbeitsmodell 15 gemäss Fig.4. In diesem sind nun Löcher 20, die mit den Pins 2a in der Sockelplatte 1c zusammenwirken. Im Bereich dieser Löcher 20 liegen Schnitte 21 zum Auseinandertrennen des Arbeitsmodelles in einzelne Detailarbeitsmodelle. Jedes Detailarbeitsmodell 16 ist somit mit Halblöchern 22 versehen. Diese Halblöcher 22 wirken jeweils mit den Pins 2a direkt zusammen. Die Lage der Detailarbeitsmodelle 16 ist somit jederzeit rekonstruierbar. Ein Zusetzen der Löcher ist infolge ihrer Oeffnung und ihrer Arbeitslage nach unten bzw. durch ihren aufgeschnittenen Zustand in je zwei Halblöches nich möglich. Die Arbeitsmodelle 16 können einwandfrei auch ohne Anwendung der Sockelplatte 1 eben und senkrecht aufgestellt werden. Beim Einsetzen der Segmente sind die Halblöcher und die Pins sichtbar, so dass das Positionieren einfach ist und ohne unnötige Schabbelastung des Gipses erfolgt. Zudem sind die Pins noch abgerundet, wodurch ausserdem unerwünschte Sollbruchstellen im Gips vermieden sind.

Die Zahnmodelle sind mit 23 beziffert (Fig.4). Der Zahnabdruck im Abdruck 17 ist mit 24 beziffert, während der Abdruck des Zahnkranzes die Ziffer 25 trägt (Fig.3).

Die Pins 2 können - wie aus Fig.2 besser ersichtlich - die unterschiedlichsten Formen aufweisen, die unterschiedliche Vorteile und Effekte zeigen. Pin 2b ist mit einem Gewinde 26 versehen, das direkt mit einem Gewinde 5 in der Bohrung 3b zusammenwirken kann. Ein Inbusloch 8 ermöglicht das einfäche Ein- und Ausdrehen des Pins 2b aus der Bohrung 3b. Dadurch könnten Pins aus einer unerwünschten Lage auch entfernt und später dort wieder plaziert werden. Bei den Sonderplatten für Ausnahmesituationen ist eine Bohrung 3c mit Klebeflächen 6 versehen, an denen das verjüngte Verankerungsende 27 des Pins 2c eingeklebt werden kann. Der Pin 2d entspricht an seinem Verankerungsende 27b dem Durchmesser der Bohrung 3d, die einen Presssitz 4 für den Pin 2d bildet. Ein ebensolcher Presssitz 4 ist für den Pin 2e gebildet, der an seinem Verankerungsende 27c Rippen 28 aufweist. Die Rippen ermöglichen ein besonders haftsicheres Verbinden des Pins

4

2e mit der Sokkelplatte 1b. Die beiden Pins 2d und 2e ermöglichen darüber hinaus das einfache Einsetzen in Sockelplatten 1, die zunächst lediglich mit Bohrungen versehen sind. In diesen Bohrungen können die Pins schon in der Stellung nach Fig.3 beim Positionieren über dem Abdruck 17 von der Unterseite 14 her (die in dieser Position die Oberseite bildet) mit der Spitze voran eingesetzt werden. beschliessend können sie beispielsweise mittels Hammerschlag durch die Sockelplatte 1c geschlagen werden und kommen so in ihre richtige Position. Alle Pins gemäss Fig.2 sind an ihrem dem Arbeitsmodell zugewandten Ende konisch verjüngt, wodurch das Arbeitsmodell leicht und praktisch reibungslos auf die Pins bzw. ihr Ende 7 aufgesetzt und wieder abgenommen werden kann.

Die konische Ausbildung der Pins beträgt ca. 2 bis 10°, vorzugsweise 3 bis 6°. Sie können jedoch zur Reibungsreduktion auch mehrfach konisch ausgebildet sein, z.B. im Bereich der oberen Hälfte mit einem Konus von 6° und in der unteren Hälfte mit einem Konus von 3°. Durch eine solche Ausbildung ist das Einfädeln erleichtert; trotzdem ist eine stabile Führung gewährleistet.

Aus der Fig.6 ist ein herkömmliches Zahnkranzmodell 35 ersichtlich, in welchem Pins 32 festhaftend integriert sind. Die Sägeschlitze werden neben den Pins 32 im Interdentalraum gesetzt, sodass die Pins jeweils im Bereich der Zähne 34 liegen.

Im folgenden wird zusammenfassend das Verfahren zum Herstellen von Arbeitsmodellen unter Zuhilfenahme der erfindungsgemässen Sockelplatten beschrieben:

a) Es wird entweder eine zur Objektsituation passende, insbesondere den Zahnbogen und die Zahnabstände berücksichtigende, vorgefertigte Sockelplatte 1 gewählt, oder, wenn keine Sockelplatte aus dem Sortiment mit der gegebenen Objektsituation übereinstimmt, wird eine lediglich vorgebohrte Sockelplatte 1 - noch ohne Pins 2 oder eine mit einer willkürlichen geometrischen Pinanordnung - gewählt.

b) Die vorgefertigte Sockelplatte 1 wird so auf den Abdruck eingerichtet und mit einer knetbaren Masse 18, z.B. mit einer selbsthärtenden Silikonmasse oder mit Gips (sog. Positionierschlüssel) fixiert, so dass die Pins 2 der Sokkelplatte 1 im Bereich zwischen den Detailmodellen 16 (Segmenten) - bei Gebissmodellen zwischen den Zähnen 23, bzw. Zahnmodellen - plaziert sind. Diese Positionen sind infolge der Transparenz der Sockelplatte 1 ersichtlich. Sind aus objektbezogenen Gründen Pins 2 im Wege, so können diese in Ausnahmefällen herausgeschraubt oder einfach abgebrochen oder abgeschnitten werden. Bei Anwendung der lediglich mit Bohrungen 3 vorgebohrten Sockelplatte 1 werden die gewünschten Positionen für die Pins 2 markiert; sie werden anschliessend mit Pins versehen, die eingeschlagen, geschraubt, geklebt, od.dgl. werden.

c) Anschliessend wird die Sockelplatte 1 kurz abgenommen und der Abdruck in der konventionellen Art mit Gips, Epoxidharz, od.dgl. ausgegossen. Die knetbare Masse 18, der Positionierschlüssel, bleibt formtreu erhalten.

d) Die Sockelplatte 1 wird sodann an der unteren Seite mit einem Trennmittel bestrichen oder besprüht - vorzugsweise mit einem Silikonspray oder Fett.

e) Die Sockelplatte 1 wird sodann auf dem mit Gips, Epoxidharz, od.dgl. ausgefülltem Abdruck 17 plaziert. Die Positionerschüssel 18 werden wieder angelegt und verhindern ein Verdrehen der vorher gewählten Position der Sockelplatte 1 relativ zum Abdruck des Objekts.

f) Nach dem Aushärten des Modellmaterials wird in üblicher Weise der Abdruck 17 entfernt. Durch leichtes Hämmern kann das Arbeitsmodell 15 von der Sockelplatte 1 gelöst werden. Im Arbeitsmodell 15 verbleiben die Abdrücke, bzw. Löcher 20 der Pins 2. (Fig.4)

g) Durch das Zersägen des Arbeitsmodelles 15 Segmente werden bauchbare Detailarbeitsmodelle 16 hergestellt, auf denen - beispielsweise in der Zahntechnik - im weiteren Kronen, Brücken, usw. hergestellt werden können. Die Sägeschlitze 21 werden vorsorglich durch die Löcher 20 gesetzt, so dass die Segmente jeweils von Halblöchern 22 begrenzt sind auf der Sockelplatte 1 durch die angrenzenden Pins 2 mehrfach geführt sind.

Bezugszeichenliste

| 1 | Sockelplatte a,b,c |
|---|---|
| 2 | Pin a,b,c,d,e |
| 3 | Bohrungen a,b,c,d,e |
| 4 | Pressitz |
| 5 | Gewinde |
| 6 | Klebefläche |
| 7 | Ende des Pins |
| 8 | Inbusloch |
| 9 | Fläche |

| 10 | Oberfläche |
|----|-----------|
| 11 | Folie |
| 12 | Rillen |
| 13 | Magnet |
| 14 | Unterseite |
| 15 | Arbeitsmodell |
| 16 | Detailarbeitsmodell |
| 17 | Abdruck |
| 18 | knetbare Masse, Positionierschlüssel |
| 19 | Handgriff |
| 20 | Löcher |
| 21 | Schnitte Sägeschlitze |
| 22 | Halblöcher |
| 23 | Zahnmodell |
| 24 | Zahnabdruck |
| 25 | Zahnkranzabdruck |
| 26 | Gewinde |
| 27 | Verankerungsende a,b,c, |
| 28 | Rippen |
| P | Punkt |
| 32 | Pins |
| 34 | Zähne |
| 35 | Zahnkranzmodell |

**Patentansprüche**

1. Vorgefertige Sockelplatte (1), insbesondere zur Herstellung eines zahntechnischen Arbeitsmodells (15), wobei durch Pins (2) ein Eingriff zwischen Arbeitsmodell und der Sockelplatte (1) herstellbar ist, dadurch gekennzeichnet, dass die Pins (2a) in montiertem Zustand der Sockelplatte (1c) mit dieser so verankert sind, dass sie beim späteren Abheben des Arbeitsmodelles in der Sockelplatte (1c) verbleiben und grösstenteils im Bereich ausserhalb der zu formenden Teile, insbesondere im Interdentalraum des Gebissmodelles, liegen. (Fig.3;5)

2. Sockelplatte nach Anspruch 1, dadurch gekennzeichnet, dass die Sockelplatte (1) mindestens 2 konzentrische Reihen, die dem Zahnbogen nachgebildet sind, von je mindestens 15 dauerhaft verankerten Pins (2) mit einer glatten Oberfläche aufweist.

3. Sockelplatte nach Anspruch 1 oder 2, dadurch gekennzeichnet, dass sie aus einem durchsichtigen Material aufgebaut ist und vorzugsweise an ihrer den Pins (2) abgewandten Seite haftungserhöhend ausgebildet ist, insbesondere eine magnetische Vorrichtung (12,13) und/oder Nuten mit trapezförmigem Querschnitt aufweist. (Fig.1;3;5)

4. Sockelplatte nach einem der vorhergehenden Ansprüche, dadurch gekennzeichnet, dass die Pins (2b-e) in Richtung auf ihr der Sockelplatte abgewandtes Ende (7) wenigstens teilweise konisch verjüngt ausgebildet und/oder gegenüber benachbarten Pins (2) zumindest teilweise - vorzugsweise im inneren Schneidezahnbereich - unterschiedlich dimensioniert - gegebenenfalls schmäler - sind, wobei die abragenden Kanten bevorzugt abgerundet sind.

5. Sockelplatte nach einem der vorhergehenden Ansprüche, dadurch gekennzeichnet, dass die Pins (2b) für das Zusammenwirken mit einem Werkzeug ausgebildet sind. (Fig.2)

6. Sockelplatte nach einem der vorhergehenden Ansprüche, dadurch gekennzeichnet, dass die Pins (2) in Wandungen von Bohrungen (3) verankert sind, wobei die verankerten Teile der Pins (2) vorzugsweise eine gerändelte Oberfläche aufweisen.

7. Sockelplatte nach einem der Ansprüche 1 bis 4, dadurch gekennzeichnet, dass sie mit den Pins (2) - vorzugsweise durch gemeinsames Spritzgiessen - einstückig aus zähhartem Kunststoff geformt ist.

8. Sockelplatte nach einem der vorhergehenden Ansprüche, dadurch gekennzeichnet, dass die einzelnen Pins (2) willkürlich, gewaltsam - vorzugsweise unter Zuhilfenahme eines Werkzeuges (z.B. einer Zange oder eines Messers) - entfernbar sind, gegebenenfalls eine Sollbruchstelle aufweisen.

9. Sockelplatte nach einem der vorhergehenden Ansprüche, dadurch gekennzeichnet, dass sie mit den Pins (2) an ihrer dem Arbeitsmodell zugewandten Fläche (9) mit einer haftungsmindernden Oberfläche (10) beschichtet ist.

10. Sortiment von Sockelplatten nach einem der vorhergehenden Ansprüche, dadurch gekennzeichnet, dass entsprechend den anatomischen Unterschieden zwischen den gängigsten Gebissformen wenigstens 6, vorzugsweise 8 bis 12 unterschiedliche Sockelplatten (1) (je 3 bis 6 für Oberkiefer und Unterkiefer) vorgesehen sind.

11. Sortiment nach Anspruch 10, dadurch gekennzeichnet, dass zusätzlich zumindest eine, vorzugsweise 3 bis 6 Sockelplatten (1) mit mehr als 18 Pins (2) je Reihe vorgesehen sind, die in einem vorzugsweise gleichförmigen, willkürlichen bestand zueinander liegen.

12. Sortiment nach Anspruch 10 oder 11, dadurch gekennzeichnet, dass die Pins (2) an der Sockelplatte (1) nach einer der folgenden Koordinatenlagen in mm angeordnet sind, wobei die Angaben in der X - Y - Richtung von einem einzigen, für jede Platte festgelegten Punkt (P, Fig. 1) erfolgen, und wobei die angegebenen Vorzugswerte in einer Plus-Minus-Toleranz von 1 mm liegen:
Für den Unterkiefer

```
X-30,0 Y  5,0;    X-25,0 Y  5,0;    X 30,0 Y  5,0;    X 25,0 Y  5,0;
X 29,0 Y 14,5;    X 24,0 Y 13,0;    X-29,0 Y 14,5;    X-24,0 Y 13,0;
X-25,0 Y 24,0;    X-20,3 Y 22,5;    X 25,0 Y 24,0;    X 20,3 Y 22,5;
X 21,5 Y 35,8;    X 16,5 Y 34,4;    X-21,5 Y 35,8;    X-16,5 Y 34,4;
X-19,3 Y 42,4;    X-14,6 Y 40,4;    X 19,3 Y 42,4;    X 14,6 Y 40,4;
X 15,5 Y 49,2;    X 12,5 Y 46,0;    X-15,5 Y 49,2;    X-12,5 Y 46,0;
X-12,0 Y 53,5;    X- 9,5 Y 50,3;    X 12,0 Y 53,5;    X  9,5 Y 50,3;
X  6,0 Y 56,0;    X  4,8 Y 52,0;    X- 6,0 Y 56,0;    X- 4,8 Y 52,0;
X  0,0 Y 56,2;    X  0,0 Y 52,2;
```

oder

```
X-32,0 Y  9,0;    X-26,5 Y  9,0;    X 32,0 Y  9,0;    X 26,5 Y  9,0;
X 30,5 Y 17,0;    X 25,0 Y 16,0;    X-30,5 Y 17,0;    X-25,0 Y 16,0;
X-26,5 Y 26,0;    X-21,5 Y 24,0;    X 26,5 Y 26,0;    X 21,5 Y 24,0;
X 23,0 Y 36,0;    X 18,0 Y 35,0;    X-23,0 Y 36,0;    X-18,0 Y 35,0;
X-20,0 Y 43,0;    X-15,5 Y 41,0;    X 20,0 Y 43,0;    X 15,5 Y 41,0;
X 16,0 Y 48,0;    X 12,5 Y 45,0;    X-16,0 Y 48,0;    X-12,5 Y 45,0;
X-11,0 Y 52,0;    X- 9,5 Y 48,5;    X 11,0 Y 52,0;    X  9,5 Y 48,5;
X  6,0 Y 54,0;    X  4,5 Y 50,0;    X- 6,0 Y 54,0;    X- 4,5 Y 50,0;
X  0,0 Y 55,0;    X  0,0 Y 51,0;
```

oder

```
X-28,0 Y  4,0;   X-23,0 Y  4,0;   X 28,0 Y  4,0;   X 23,0 Y  4,0;
X 29,5 Y 14,5;   X 24,5 Y 13,5;   X-29,5 Y 14,5;   X-24,5 Y 13,5;
X-28,0 Y 24,2;   X-23,0 Y 22,5;   X 28,0 Y 24,2;   X 23,0 Y 22,5;
X 26,0 Y 34,0;   X 21,0 Y 33,7;   X-26,0 Y 34,0;   X-21,0 Y 33,7;


X-22,5 Y 42,0;   X-18,0 Y 40,0;   X 22,5 Y 42,0;   X 18,0 Y 40,0;
X 19,0 Y 48,0;   X 15,0 Y 46,0;   X-19,0 Y 48,0;   X-15,0 Y 46,0;
X-12,0 Y 53,0;   X- 9,0 Y 49,5;   X 12,0 Y 53,0;   X  9,0 Y 49,5;
X  5,5 Y 54,0;   X  4,0 Y 50,0;   X- 5,5 Y 54,0;   X- 4,0 Y 50,0;
X  0,0 Y 54,0;   X  0,0 Y 50,0;
```

für den Oberkiefer:

```
X-26,0 Y  4,0;   X-21,0 Y  4,0;   X 26,0 Y  4,0;   X 21,0 Y  4,0;
X 27,0 Y 12,5;   X 21,5 Y 12,0;   X-27,0 Y 12,5;   X-21,5 Y 12,0;
X-24,8 Y 20,8;   X-20,2 Y 19,5;   X 24,8 Y 20,8;   X 20,2 Y 19,5;
X 23,0 Y 30,5;   X 18,0 Y 28,6;   X-23,0 Y 30,5;   X-18,0 Y 28,6;
X-21,0 Y 37,7;   X-16,0 Y 35,5;   X 21,0 Y 37,7;   X 16,0 Y 35,5;
X-17,7 Y 43,5;   X-14,3 Y 40,8;   X 17,7 Y 43,5;   X 14,3 Y 40,8;
X 13,8 Y 48,5;   X 10,3 Y 45,5;   X-13,8 Y 48,5;   X-10,3 Y 45,5;
X- 9,0 Y 52,0;   X- 6,4 Y 48,0;   X  9,0 Y 52,0;   X  6,4 Y 48,0;
X  0,0 Y 53,8;   X  0,0 Y 49,0;
```

oder

```
X-29,0 Y  5,0;   X-24,0 Y  5,0;   X 29,0 Y  5,0;   X 24,0 Y  5,0;
X 30,0 Y 13,5;   X 24,5 Y 13,0;   X-30,0 Y 13,5;   X-24,5 Y 13,0;
X-28,5 Y 22,5;   X-23,7 Y 20,5;   X 28,5 Y 22,5;   X 23,7 Y 20,5;
X 25,0 Y 31,5;   X 21,0 Y 29,5;   X-25,0 Y 31,5;   X-21,0 Y 29,5;
X-22,0 Y 38,3;   X-18,0 Y 36,0;   X 22,0 Y 38,3;   X 18,0 Y 36,0;
X 19,0 Y 43,8;   X 15,5 Y 41,5;   X-19,0 Y 43,8;   X-15,5 Y 41,5;
X-14,2 Y 49,2;   X-11,3 Y 45,0;   X 14,2 Y 49,0;   X 11,3 Y 45,0;
X  7,3 Y 50,8;   X  5,5 Y 46,3;   X- 7,3 Y 50,8;   X- 5,5 Y 46,3;
X  0,0 Y 51,5;   X  0,0 Y 47,0;
```

oder

```
X-30,5 Y  4,0;   X-24,5 Y  4,0;   X 30,5 Y  4,0;   X 24,5 Y  4,0;
X 31,0 Y 12,0;   X 26,0 Y 10,5;   X-31,0 Y 12,0;   X-26,0 Y 10,5;
X-28,5 Y 21,5;   X-23,5 Y 20,5;   X 28,5 Y 21,5;   X 23,5 Y 20,5;
X 25,2 Y 32,5;   X 20,6 Y 30,5;   X-25,2 Y 32,5;   X-20,6 Y 30,5;
```

8

```
X-23,0 Y 39,0;   X-17,5 Y 37,0;   X 23,0 Y 39,0;   X 17,5 Y 37,0;
X 20,5 Y 45,5;   X 16,0 Y 43,5;   X-20,5 Y 45,5;   X-16,0 Y 43,5;
X-14,5 Y 52,5;   X-12,0 Y 48,5;   X 14,5 Y 52,5;   X 12,0 Y 48,5;
X  8,5 Y 55,6;   X  6,5 Y 51,0;   X- 8,5 Y 55,6;   X- 6,5 Y 51,0;
X  0,0 Y 56,9;   X  0,0 Y 52,0;
```

als Sonderplatte:

```
X-29,0 Y  7,0;   X 29,0 Y  7,0;   X 29,0 Y 13,0;   X-29,0 Y 13,0;
X-28,0 Y 19,0;   X 28,0 Y 19,0;   X 26,0 Y 24,5;   X-26,0 Y 24,5;
X-24,0 Y 30,5;   X 24,0 Y 30,5;   X 22,0 Y 36,0;   X-22,0 Y 36,0;
X-19,5 Y 41,5;   X 19,5 Y 41,5;   X 15,9 Y 46,4;   X-15,9 Y 46,4;
X-11,5 Y 50,5;   X 11,5 Y 50,5;   X  6,0 Y 52,2;   X- 6,0 Y 52,2;
X  0,0 Y 53,0;   X-23,0 Y 10,0;   X 23,0 Y 10,0;   X 23,0 Y 15,2;
X-23,0 Y 15,2;   X-21,5 Y 20,5;   X 21,5 Y 20,5;   X 20,0 Y 25,4;
X-20,0 Y 25,4;   X-18,0 Y 30,5;   X 18,0 Y 30,5;   X 16,5 Y 35,0;
X-16,5 Y 35,0;   X-14,0 Y 39,1;   X 14,0 Y 39,1;   X 11,0 Y 43,3;
X-11,0 Y 43,3;   X- 7,0 Y 46,2;   X  7,0 Y 46,2;   X  2,5 Y 47,5;
X- 2,5 Y 47,5;
```

oder

```
X-31,0 Y  8,0;   X 31,0 Y  8,0;   X 30,5 Y 14,5;   X-30,5 Y 14,5;
X-30,0 Y 20,3;   X 30,0 Y 20,3;   X 28,5 Y 26,5;   X-28,5 Y 26,5;
X-26,5 Y 32,0;   X 26,5 Y 32,0;   X 23,8 Y 37,0;   X-23,8 Y 37,0;
X-20,5 Y 42,5;   X 20,5 Y 42,5;   X 15,8 Y 46,8;   X-15,8 Y 46,8;
X-11,2 Y 50,0;   X 11,2 Y 50,0;   X  6,0 Y 52,8;   X- 6,0 Y 52,8;
X  0,0 Y 53,7;   X-25,5 Y 11,0;   X 25,5 Y 11,0;   X 25,0 Y 17,0;
X-25,5 Y 17,0;   X-23,5 Y 23,6;   X 23,5 Y 23,6;   X 22,0 Y 28,0;
X-22,0 Y 28,0;   X-20,0 Y 32,5;   X 20,0 Y 32,5;   X 17,5 Y 37,0;
X-17,5 Y 37,0;   X-14,5 Y 41,0;   X 14,5 Y 41,0;   X 11,0 Y 44,0;
X-11,0 Y 44,0;   X- 6,8 Y 46,5;   X  6,8 Y 46,5;   X  2,5 Y 48,0;
X- 2,5 Y 48,0;
```

oder

9

```
X-27,0 Y  4,5;   X 27,0 Y  4,5;   X 28,5 Y 10,0;   X-28,5 Y 10,0;
X-29,0 Y 16,5;   X 29,0 Y 16,5;   X 29,0 Y 22,5;   X-29,0 Y 22,5;
X-28,5 Y 28,5;   X 28,5 Y 28,5;   X 26,5 Y 34,5;   X-26,5 Y 34,5;
X-24,0 Y 39,0;   X 24,0 Y 39,0;   X 21,0 Y 44,0;   X-21,0 Y 44,0;
X-16,5 Y 49,5;   X 16,5 Y 49,5;   X 11,75Y 53,25;  X-11,75Y 53,25
X- 5,9 Y 54,8;   X  5,9 Y 54,8;   X  0,0 Y 55,0;   X-22,0 Y  7,5;
X 22,0 Y  7,5;   X 23,5 Y 12,5;   X-23,5 Y 12,5;   X-23,8 Y 18,1;
X 23,8 Y 18,1;   X 23,0 Y 23,5;   X-23,0 Y 23,5;   X-22,5 Y 29,5;
X 22,5 Y 29,5;   X 20,5 Y 34,5;   X-20,5 Y 34,5;   X-17,7 Y 39,0;
X 17,7 Y 39,0;   X 15,0 Y 43,0;   X-15,0 Y 43,0;   X-11,3 Y 46,0;
X 11,3 Y 46,0;   X  7,2 Y 48,7;   X- 7,2 Y 48,7;   X- 2,5 Y 49,0;
X  2,5 Y 49,0;
```

## Claims

1. Prefabricated baseplate (1), in particular for the production of a dental working model (15), engagement between the working model and the baseplate (1) being producible by pins (2), characterised in that, when the baseplate (1c) is in the mounted state, the pins (2a) are anchored therein so that, when the working model is subsequently lifted off, they remain in the baseplate (1c) and for the most part are in the region outside the parts to be shaped, in particular in the interdental space of the denture model (Fig. 3; 5).

2. Baseplate according to Claim 1, characterised in that the baseplate (1) has at least 2 concentric rows, which simulate the dental arch, of at least 15 permanently anchored pins (2) each, having a smooth surface.

3. Baseplate according to Claim 1 or 2, characterised in that it consists of a transparent material and is preferably designed to promote adhesion on its side opposite the pins (2), in particular has a magnetic apparatus (12, 13) and/or grooves with a trapezoidal cross-section. (Fig. 1; 3; 5)

4. Baseplate according to any of the preceding Claims, characterised in that the pins (2b-e) are at least partly conically tapered towards their end (7) opposite the baseplate and/or at least partly - preferably in the inner incisor region - differently dimensioned compared with adjacent pins (2) - if appropriate narrower, the projecting edges preferably being rounded off.

5. Baseplate according to any of the preceding Claims, characterised in that the pins (2b) are formed for cooperation with a tool. (Fig. 2)

6. Baseplate according to any of the preceding Claims, characterised in that the pins (2) are anchored in the walls of bores (3), the anchored parts of the pins (2) preferably having a knurled surface.

7. Baseplate according to any of Claims 1 to 4, characterised in that they are formed integrally with the pins (2) - preferably by joint injection moulding - from tough plastic.

8. Baseplate according to any of the preceding Claims, characterised in that the individual pins (2) can be removed at random and forcibly - preferably with the aid of a tool (for example a pair of pliers or a knife) - and, if appropriate, have an ideal breaking point.

9. Baseplate according to any of the preceding Claims, characterised in that it, with the pins (2), is coated on its surface (9) facing the working model with an adhesion-reducing surface (10).

10. Assortment of baseplates according to any of the preceding Claims, characterised in that at least 6, preferably 8 to 12, different baseplates (1) (3 to 6 each for the upper jaw and the lower jaw) are provided in conformity with the anatomical differences between the commonest denture forms.

11. Assortment according to Claim 10, characterised in that at least one baseplate (1), preferably 3 to 6 baseplates (1), having more than 18 pins (2) per row which are preferably a uniform, random distance apart is or are additionally provided.

12. Assortment according to Claim 10 or 11, characterised in that the pins (2) are arranged on the baseplate (1) according to one of the following coordinate positions in mm, the data in the X - Y direction being given relative to a single point (P, Fig. 1) determined for each plate, and the stated preferred values having a plus/minus tolerance of 1 mm:
for the lower jaw:

| | | | |
|---|---|---|---|
| X-30.0 Y 5.0; | X-25.0 Y 5.0; | X 30.0 Y 5.0; | X 25.0 Y 5.0; |
| X-29.0 Y 14.5; | X-24.0 Y 13.0; | X-29.0 Y 14.5; | X-24.0 Y 13.0; |
| X-25.0 Y 24.0; | X-20.3 Y 22.5; | X 25.0 Y 24.0; | X 20.3 Y 22.5; |
| X-21.5 Y 35.8; | X 16.5 Y 34.4; | X-21.5 Y 35.8; | X-16.5 Y 34.4; |
| X-19.3 Y 42.4; | X-14.6 Y 40.4; | X 19.3 Y 42.4; | X 14.6 Y 40.4; |
| X 15.5 Y 49.2; | X 12.5 Y 46.0; | X-15.5 Y 49.2; | X-12.5 Y 46.0; |
| X-12.0 Y 53.5; | X- 9.5 Y 50.3; | X 12.0 Y 53.5; | X 9.5 Y 50.3; |
| X 6.0 Y 56.0; | X 4.8 Y 52.0; | X- 6.0 Y 56.0; | X- 4.8 Y 52.0; |
| X 0.0 Y 56.2; | X 0.0 Y 52.2; | | |

or

| | | | |
|---|---|---|---|
| X-32.0 Y 9.0; | X-26.5 Y 9.0; | X 32.0 Y 9.0; | X 26.5 Y 9.0; |
| X 30.5 Y 17.0; | X 25.0 Y 16.0; | X-30.5 Y 17.0; | X-25.0 Y 16.0; |
| X-26.5 Y 26.0; | X-21.5 Y 24.0; | X 26.5 Y 26.0; | X 21.5 Y 24.0; |
| X 23.0 Y 36.0; | X 18.0 Y 35.0; | X-23.0 Y 36.0; | X-18.0 Y 35.0; |
| X-20.0 Y 43.0; | X-15.5 Y 41.0; | X 20.0 Y 43.0; | X 15.5 Y 41.0; |
| X 16.0 Y 48.0; | X 12.5 Y 45.0; | X-16.0 Y 48.0; | X-12.5 Y 45.0; |
| X-11.0 Y 52.0; | X- 9.5 Y 48.5; | X 11.0 Y 52.0; | X 9.5 Y 48.5; |
| X 6.0 Y 54.0; | X 4.5 Y 50.0; | X- 6.0 Y 54.0; | X- 4.5 Y 50.0; |
| X 0.0 Y 55.0; | X 0.0 Y 51.0; | | |

or

| | | | |
|---|---|---|---|
| X-28.0 Y 4.0; | X-23.0 Y 4.0; | X 28.0 Y 4.0; | X 23.0 Y 4.0; |
| X 29.5 Y 14.5; | X 24.5 Y 13.5; | X-29.5 Y 14.5; | X-24.5 Y 13.5; |
| X-28.0 Y 24.2; | X-23.0 Y 22.5; | X 28.0 Y 24.2; | X 23.0 Y 22.5; |

```
X 26.0 Y 34.0;      X 21.0 Y 33.7;      X-26.0 Y 34.0;      X-21.0 Y 33.7;
X-22.5 Y 42.0;      X-18.0 Y 40.0;      X 22.5 Y 42.0;      X 18.0 Y 40.0;
X 19.0 Y 48.0;      X 15.0 Y 46.0;      X-19.0 Y 48.0;      X-15.0 Y 46.0;
X-12.0 Y 53.0;      X- 9.0 Y 49.5;      X 12.0 Y 53.0;      X  9.0 Y 49.5;
X  5.5 Y 54.0;      X  4.0 Y 50.0;      X- 5.5 Y 54.0;      X- 4.0 Y 50.0;
X  0.0 Y 54.0;      X  0.0 Y 50.0;
```

for the upper jaw:

```
X-26.0 Y  4.0;      X-21.0 Y  4.0;      X 26.0 Y  4.0;      X 21.0 Y  4.0;
X 27.0 Y 12.5;      X 21.5 Y 12.0;      X-27.0 Y 12.5;      X-21.5 Y 12.0;
X-24.8 Y 20.8;      X-20.2 Y 19.5;      X 24.8 Y 20.8;      X 20.2 Y 19.5;
X 23.0 Y 30.5;      X 18.0 Y 28.6;      X-23.0 Y 30.5;      X-18.0 Y 28.6;
X-21.0 Y 37.7;      X-16.0 Y 35.5;      X 21.0 Y 37.7;      X 16.0 Y 35.5;
X-17.7 Y 43.5;      X-14.3 Y 40.8;      X 17.7 Y 43.5;      X 14.3 Y 40.8;
X 13.8 Y 48.5;      X 10.3 Y 45.5;      X-13.8 Y 48.5;      X-10.3 Y 45.5;
X- 9.0 Y 52.0;      X- 6.4 Y 48.0;      X  9.0 Y 52.0;      X  6.4 Y 48.0;
X  0.0 Y 53.8;      X  0.0 Y 49.0;
```

or

```
X-29.0 Y  5.0;      X-24.0 Y  5.0;      X 29.0 Y  5.0;      X 24.0 Y  5.0;
X 30.0 Y 13.5;      X 24.5 Y 13.0;      X-30.0 Y 13.5;      X-24.5 Y 13.0;
X-28.5 Y 22.5;      X-23.7 Y 20.5;      X 28.5 Y 22.5;      X 23.7 Y 20.5;
X 25.0 Y 31.5;      X 21.0 Y 29.5;      X-25.0 Y 31.5;      X-21.0 Y 29.5;
X-22.0 Y 38.3;      X-18.0 Y 36.0;      X 22.0 Y 38.3;      X 18.0 Y 36.0;
X 19.0 Y 43.8;      X 15.5 Y 41.5;      X-19.0 Y 43.8;      X-15.5 Y 41.5;
X-14.2 Y 49.2;      X-11.3 Y 45.0;      X 14.2 Y 49.0;      X 11.3 Y 45.0;
X  7.3 Y 50.8;      X  5.5 Y 46.3;      X- 7.3 Y 50.8;      X- 5.5 Y 46.3;
X  0.0 Y 51.5;      X  0.0 Y 47.0;
```

or

```
X-30.5 Y  4.0;      X-24.5 Y  4.0;      X 30.5 Y  4.0;      X 24.5 Y  4.0;
X 31.0 Y 12.0;      X 26.0 Y 10.5;      X-31.0 Y 12.0;      X-26.0 Y 10.5;
X-28.5 Y 21.5;      X-23.5 Y 20.5;      X 28.5 Y 21.5;      X 23.5 Y 20.5;
X 25.2 Y 32.5;      X 20.6 Y 30.5;      X-25.2 Y 32.5;      X-20.6 Y 30.5;
```

```
X-23.0 Y 39.0;    X-17.5 Y 37.0;    X 23.0 Y 39.0;    X 17.5 Y 37.0;
X 20.5 Y 45.5;    X 16.0 Y 43.5;    X-20.5 Y 45.5;    X-16.0 Y 43.5;
X-14.5 Y 52.5;    X-12.0 Y 48.5;    X 14.5 Y 52.5;    X 12.0 Y 48.5;
X  8.5 Y 55.6;    X  6.5 Y 51.0;    X- 8.5 Y 55.6;    X- 6.5 Y 51.0;
X  0.0 Y 56.9;    X  0.0 Y 52.0;
```

as a special plate:

```
X-29.0 Y  7.0;    X 29.0 Y  7.0;    X 29.0 Y 13.0;    X-29.0 Y 13.0;
X-28.0 Y 19.0;    X 28.0 Y 19.0;    X 26.0 Y 24.5;    X-26.0 Y 24.5;
X-24.0 Y 30.5;    X 24.0 Y 30.5;    X 22.0 Y 36.0;    X-22.0 Y 36.0;
X-19.5 Y 41.5;    X 19.5 Y 41.5;    X 15.9 Y 46.4;    X-15.9 Y 46.4;
X-11.5 Y 50.5;    X 11.5 Y 50.5;    X  6.0 Y 52.2;    X- 6.0 Y 52.2;
X  0.0 Y 53.0;    X-23.0 Y 10.0;    X 23.0 Y 10.0;    X 23.0 Y 15.2;
X-23.0 Y 15.2;    X-21.5 Y 20.5;    X 21.5 Y 20.5;    X 20.0 Y 25.4;
X-20.0 Y 25.4;    X-18.0 Y 30.5;    X 18.0 Y 30.5;    X 16.5 Y 35.0;
X-16.5 Y 35.0;    X-14.0 Y 39.1;    X 14.0 Y 39.1;    X 11.0 Y 43.3;
X-11.0 Y 43.3;    X- 7.0 Y 46.2;    X  7.0 Y 46.2;    X  2.5 Y 47.5;
X- 2.5 Y 47.5;
```

or

```
X-31.0 Y  8.0;    X 31.0 Y  8.0;    X 30.5 Y 14.5;    X-30.5 Y 14.5;
X-30.0 Y 20.3;    X 30.0 Y 20.3;    X 28.5 Y 26.5;    X-28.5 Y 26.5;
X-26.5 Y 32.0;    X 26.5 Y 32.0;    X 23.8 Y 37.0;    X-23.8 Y 37.0;
X-20.5 Y 42.5;    X 20.5 Y 42.5;    X 15.8 Y 46.8;    X-15.8 Y 46.8;
X-11.2 Y 50.0;    X 11.2 Y 50.0;    X  6.0 Y 52.8;    X- 6.0 Y 52.8;
X  0.0 Y 53.7;    X-25.5 Y 11.0;    X 25.5 Y 11.0;    X 25.0 Y 17.0;
X-25.5 Y 17.0;    X-23.5 Y 23.6;    X 23.5 Y 23.6;    X 22.0 Y 28.0;
X-22.0 Y 28.0;    X-20.0 Y 32.5;    X 20.0 Y 32.5;    X 17.5 Y 37.0;
X-17.5 Y 37.0;    X-14.5 Y 41.0;    X 14.5 Y 41.0;    X 11.0 Y 44.0;
X-11.0 Y 44.0;    X- 6.8 Y 46.5;    X  6.8 Y 46.5;    X  2.5 Y 48.0;
X- 2.5 Y 48.0;
```

or

```
X-27.0 Y  4.5;    X 27.0 Y  4.5;    X 28.5 Y 10.0;    X-28.5 Y 10.0;
```

13

```
X-29.0 Y 16.5;    X 29.0 Y 16.5;    X 29.0 Y 22.5;    X-29.0 Y 22.5;
X-28.5 Y 28.5;    X 28.5 Y 28.5;    X 26.5 Y 34.5;    X-26.5 Y 34.5;
X-24.0 Y 39.0;    X 24.0 Y 39.0;    X 21.0 Y 44.0;    X-21.0 Y 44.0;
X-16.5 Y 49.5;    X 16.5 Y 49.5;    X 11.75Y 53.25;   X-11.75Y 53.25;
X- 5.9 Y 54.8;    X  5.9 Y 54.8;    X  0.0 Y 55.0;    X-22.0 Y  7.5;
X 22.0 Y  7.5;    X 23.5 Y 12.5;    X-23.5 Y 12.5;    X-23.8 Y 18.1;
X 23.8 Y 18.1;    X 23.0 Y 23.5;    X-23.0 Y 23.5;    X-22.5 Y 29.5;
X 22.5 Y 29.5;    X 20.5 Y 34.5;    X-20.5 Y 34.5;    X-17.7 Y 39.0;
X 17.7 Y 39.0;    X 15.0 Y 43.0;    X-15.0 Y 43.0;    X-11.3 Y 46.0;
X 11.3 Y 46.0;    X  7.2 Y 48.7;    X- 7.2 Y 48.7;    X- 2.5 Y 49.0;
X  2.5 Y 49.0.
```

## Revendications

1. Plaque préfabriquée formant socle (1), en particulier pour la fabrication d'un modèle de travail (15) pour l'art dentaire, une venue en prise pouvant être réalisée entre le modèle de travail et la plaque formant socle (1) grâce à des tenons (2), caractérisée par le fait que, dans l'état monté de la plaque formant socle (1c), les tenons (2a) sont ancrés dans celle-ci de telle manière qu'ils restent dans la plaque formant socle (1c) lorsque l'on enlève ultérieurement le modèle de travail, et qu'ils sont situés pour la plus grande partie dans la région extérieure aux parties à mettre en forme, et en particulier dans l'espace situé entre les dents du modèle de la denture (figures 3 ; 5).

2. Plaque formant socle selon la revendication 1, caractérisée par le fait que la plaque formant socle (1) comporte au moins deux rangées concentriques, lesquelles reproduisent l'arc formé par les dents, d'au moins quinze tenons (2) ancrés de manière permanente et présentant une surface lisse.

3. Plaque formant socle selon la revendication 1 ou 2, caractérisée par le fait qu'elle est constituée par un matériau transparent, et qu'elle est de préférence réalisée sur son côté opposé aux tenons (2) de manière à augmenter l'adhérence, en comportant en particulier un dispositif magnétique (13) et/ou des rainures (12) à section transversale trapézoïdale (figures 1 ; 3 ; 5).

4. Plaque formant socle selon l'une des revendications précédentes, caractérisée par le fait que les tenons (2b à 2e) sont conformés en se rétrécissant en cône, du moins partiellement, dans la direction de leur extrémité (7) qui est opposée à la plaque formant socle, et/ou que, par rapport à des tenons voisins (2), ils sont différemment dimensionnés, du moins partiellement -, de préférence dans la région intérieure des incisives - et en étant plus étroits, le cas échéant -, les arêtes en saillie étant de préférence arrondies.

5. Plaque formant socle selon l'une des revendications précédentes, caractérisée par le fait que les tenons (2b) sont conformés en vue de leur coopération avec un outil (figure 2).

6. Plaque formant socle selon l'une des revendications précédentes, caractérisée par le fait que les tenons (2) sont ancrés dans des parois de perçages (3), les parties ancrées des tenons (2) présentant de préférence une surface moletée.

7. Plaque formant socle selon l'une des revendications 1 à 4, caractérisée par le fait qu'elle est moulée avec les tenons (2) en une seule pièce en matière plastique dure - de préférence par un moulage par injection commun.

8. Plaque formant socle selon l'une des revendications précédentes, caractérisée par le fait que les divers tenons (2) peuvent être volontairement enlevés à force - de préférence en faisant appel à un outil (par exemple à une pince ou à un couteau) -, et qu'ils présentent le cas échéant un endroit de rupture préférentiel.

9. Plaque formant socle selon l'une des revendications précédentes, caractérisée par le fait qu'elle est revêtue avec les tenons (2) d'une couche diminuant l'adhérence (10) sur sa surface (9) qui est tournée vers le modèle de travail.

10. Assortiment de plaques formant socles selon l'une des revendications précédentes, caractérisé par le fait qu'en fonction des différences anatomiques entre les formes de dentures les plus courantes, il est prévu au moins six plaques formant socles (1) différentes, et de préférence de huit à douze (de trois à six à chaque fois pour la mâchoire inférieure et la mâchoire supérieure).

11. Assortiment selon la revendication 10, caractérisé par le fait qu'il est prévu en supplément au moins une plaque formant socle (1), et de préférence de trois à six, comprenant par rangée plus de 18 tenons (2) qui sont disposés à une distance entre eux choisie à volonté et de préférence régulière.

12. Assortiment selon la revendication 10 ou 11, caractérisé par le fait que les tenons (2) sont disposés sur la plaque formant socle (1) selon l'une des positions suivantes données par leurs coordonnées en millimètres, les données dans la direction X - Y étant considérées à partir d'un point unique (P, figure 1) fixé pour chaque plaque, et les valeurs préférées indiquées étant situées à l'intérieur d'une tolérance de 1 mm en plus ou en moins :
Pour la mâchoire inférieure :

```
X-30,0 Y  5,0;    X-25,0 Y  5,0;    X 30,0 Y  5,0;    X 25,0 Y  5,0;
X 29,0 Y 14,5;    X 24,0 Y 13,0;    X-29,0 Y 14,5;    X-24,0 Y 13,0;
X-25,0 Y 24,0;    X-20,3 Y 22,5;    X 25,0 Y 24,0;    X 20,3 Y 22,5;
X 21,5 Y 35,8;    X 16,5 Y 34,4;    X-21,5 Y 35,8;    X-16,5 Y 34,4;
X-19,3 Y 42,4;    X-14,6 Y 40,4;    X 19,3 Y 42,4;    X 14,6 Y 40,4;
X 15,5 Y 49,2;    X 12,5 Y 46,0;    X-15,5 Y 49,2;    X-12,5 Y 46,0;
X-12,0 Y 53,5;    X- 9,5 Y 50,3;    X 12,0 Y 53,5;    X  9,5 Y 50,3;
X  6,0 Y 56,0;    X  4,8 Y 52,0;    X- 6,0 Y 56,0;    X- 4,8 Y 52,0;
X  0,0 Y 56,2;    X  0,0 Y 52,2;
```

ou

```
X-32,0 Y  9,0;    X-26,5 Y  9,0;    X 32,0 Y  9,0;    X 26,5 Y  9,0;
X 30,5 Y 17,0;    X 25,0 Y 16,0;    X-30,5 Y 17,0;    X-25,0 Y 16,0;
X-26,5 Y 26,0;    X-21,5 Y 24,0;    X 26,5 Y 26,0;    X 21,5 Y 24,0;
X 23,0 Y 36,0;    X 18,0 Y 35,0;    X-23,0 Y 36,0;    X-18,0 Y 35,0;
X-20,0 Y 43,0;    X-15,5 Y 41,0;    X 20,0 Y 43,0;    X 15,5 Y 41,0;
X 16,0 Y 48,0;    X 12,5 Y 45,0;    X-16,0 Y 48,0;    X-12,5 Y 45,0;
X-11,0 Y 52,0;    X- 9,5 Y 48,5;    X 11,0 Y 52,0;    X  9,5 Y 48,5;
X  6,0 Y 54,0;    X  4,5 Y 50,0;    X- 6,0 Y 54,0;    X- 4,5 Y 50,0;
X  0,0 Y 55,0;    X  0,0 Y 51,0;
```

ou

```
X-28,0 Y  4,0;    X-23,0 Y  4,0;    X 28,0 Y  4,0;    X 23,0 Y  4,0;
X 29,5 Y 14,5;    X 24,5 Y 13,5;    X-29,5 Y 14,5;    X-24,5 Y 13,5;
X-28,0 Y 24,2;    X-23,0 Y 22,5;    X 28,0 Y 24,2;    X 23,0 Y 22,5;
X 26,0 Y 34,0;    X 21,0 Y 33,7;    X-26,0 Y 34,0;    X-21,0 Y 33,7;
X-22,5 Y 42,0;    X-18,0 Y 40,0;    X 22,5 Y 42,0;    X 18,0 Y 40,0;
X 19,0 Y 48,0;    X 15,0 Y 46,0;    X-19,0 Y 48,0;    X-15,0 Y 46,0;
X-12,0 Y 53,0;    X- 9,0 Y 49,5;    X 12,0 Y 53,0;    X  9,0 Y 49,5;
X  5,5 Y 54,0;    X  4,0 Y 50,0;    X- 5,5 Y 54,0;    X- 4,0 Y 50,0;
X  0,0 Y 54,0;    X  0,0 Y 50,0;
```

pour la mâchoire supérieure :

```
X-26,0 Y  4,0;    X-21,0 Y  4,0;    X 26,0 Y  4,0;    X 21,0 Y  4,0;
X 27,0 Y 12,5;    X 21,5 Y 12,0;    X-27,0 Y 12,5;    X-21,5 Y 12,0;
X-24,8 Y 20,8;    X-20,2 Y 19,5;    X 24,8 Y 20,8;    X 20,2 Y 19,5;
X 23,0 Y 30,5;    X 18,0 Y 28,6;    X-23,0 Y 30,5;    X-18,0 Y 28,6;
X-21,0 Y 37,7;    X-16,0 Y 35,5;    X 21,0 Y 37,7;    X 16,0 Y 35,5;
X-17,7 Y 43,5;    X-14,3 Y 40,8;    X 17,7 Y 43,5;    X 14,3 Y 40,8;
X 13,8 Y 48,5;    X 10,3 Y 45,5;    X-13,8 Y 48,5;    X-10,3 Y 45,5;
X- 9,0 Y 52,0;    X- 6,4 Y 48,0;    X  9,0 Y 52,0;    X  6,4 Y 48,0;
X  0,0 Y 53,8;    X  0,0 Y 49,0;
```

ou

```
X-29,0 Y  5,0;    X-24,0 Y  5,0;    X 29,0 Y  5,0;    X 24,0 Y  5,0;
X 30,0 Y 13,5;    X 24,5 Y 13,0;    X-30,0 Y 13,5;    X-24,5 Y 13,0;
X-28,5 Y 22,5;    X-23,7 Y 20,5;    X 28,5 Y 22,5;    X 23,7 Y 20,5;
X 25,0 Y 31,5;    X 21,0 Y 29,5;    X-25,0 Y 31,5;    X-21,0 Y 29,5;
X-22,0 Y 38,3;    X-18,0 Y 36,0;    X 22,0 Y 38,3;    X 18,0 Y 36,0;
X 19,0 Y 43,8;    X 15,5 Y 41,5;    X-19,0 Y 43,8;    X-15,5 Y 41,5;
X-14,2 Y 49,2;    X-11,3 Y 45,0;    X 14,2 Y 49,0;    X 11,3 Y 45,0;
X  7,3 Y 50,8;    X  5,5 Y 46,3;    X- 7,3 Y 50,8;    X- 5,5 Y 46,3;
X  0,0 Y 51,5;    X  0,0 Y 47,0;
```

ou

```
X-30,5 Y  4,0;   X-24,5 Y  4,0;   X 30,5 Y  4,0;   X 24,5 Y  4,0;
X 31,0 Y 12,0;   X 26,0 Y 10,5;   X-31,0 Y 12,0;   X-26,0 Y 10,5;
X-28,5 Y 21,5;   X-23,5 Y 20,5;   X 28,5 Y 21,5;   X 23,5 Y 20,5;
X 25,2 Y 32,5;   X 20,6 Y 30,5;   X-25,2 Y 32,5;   X-20,6 Y 30,5;
X-23,0 Y 39,0;   X-17,5 Y 37,0;   X 23,0 Y 39,0;   X 17,5 Y 37,0;
X 20,5 Y 45,5;   X 16,0 Y 43,5;   X-20,5 Y 45,5;   X-16,0 Y 43,5;
X-14,5 Y 52,5;   X-12,0 Y 48,5;   X 14,5 Y 52,5;   X 12,0 Y 48,5;
X  8,5 Y 55,6;   X  6,5 Y 51,0;   X- 8,5 Y 55,6;   X- 6,5 Y 51,0;
X  0,0 Y 56,9;   X  0,0 Y 52,0;
```

Comme plaque spéciale :

```
X-29,0 Y  7,0;   X 29,0 Y  7,0;   X 29,0 Y 13,0;   X-29,0 Y 13,0;
X-28,0 Y 19,0;   X 28,0 Y 19,0;   X 26,0 Y 24,5;   X-26,0 Y 24,5;
X-24,0 Y 30,5;   X 24,0 Y 30,5;   X 22,0 Y 36,0;   X-22,0 Y 36,0;
X-19,5 Y 41,5;   X 19,5 Y 41,5;   X 15,9 Y 46,4;   X-15,9 Y 46,4;
X-11,5 Y 50,5;   X 11,5 Y 50,5;   X  6,0 Y 52,2;   X- 6,0 Y 52,2;
X  0,0 Y 53,0;   X-23,0 Y 10,0;   X 23,0 Y 10,0;   X 23,0 Y 15,2;
X-23,0 Y 15,2;   X-21,5 Y 20,5;   X 21,5 Y 20,5;   X 20,0 Y 25,4;
X-20,0 Y 25,4;   X-18,0 Y 30,5;   X 18,0 Y 30,5;   X 16,5 Y 35,0;
X-16,5 Y 35,0;   X-14,0 Y 39,1;   X 14,0 Y 39,1;   X 11,0 Y 43,3;
X-11,0 Y 43,3;   X- 7,0 Y 46,2;   X  7,0 Y 46,2;   X  2,5 Y 47,5;
X- 2,5 Y 47,5;
```

ou

```
X-31,0 Y  8,0;   X 31,0 Y  8,0;   X 30,5 Y 14,5;   X-30,5 Y 14,5;
X-30,0 Y 20,3;   X 30,0 Y 20,3;   X 28,5 Y 26,5;   X-28,5 Y 26,5;
X-26,5 Y 32,0;   X 26,5 Y 32,0;   X 23,8 Y 37,0;   X-23,8 Y 37,0;
X-20,5 Y 42,5;   X 20,5 Y 42,5;   X 15,8 Y 46,8;   X-15,8 Y 46,8;
X-11,2 Y 50,0;   X 11,2 Y 50,0;   X  6,0 Y 52,8;   X- 6,0 Y 52,8;
X  0,0 Y 53,7;   X-25,5 Y 11,0;   X 25,5 Y 11,0;   X 25,0 Y 17,0;
X-25,5 Y 17,0;   X-23,5 Y 23,6;   X 23,5 Y 23,6;   X 22,0 Y 28,0;
X-22,0 Y 28,0;   X-20,0 Y 32,5;   X 20,0 Y 32,5;   X 17,5 Y 37,0;
X-17,5 Y 37,0;   X-14,5 Y 41,0;   X 14,5 Y 41,0;   X 11,0 Y 44,0;
X-11,0 Y 44,0;   X- 6,8 Y 46,5;   X  6,8 Y 46,5;   X  2,5 Y 48,0;
X- 2,5 Y 48,0;
```

ou

17

```
X-27,0 Y  4,5;   X 27,0 Y  4,5;   X 28,5 Y 10,0;   X-28,5 Y 10,0;
X-29,0 Y 16,5;   X 29,0 Y 16,5;   X 29,0 Y 22,5;   X-29,0 Y 22,5;
X-28,5 Y 28,5;   X 28,5 Y 28,5;   X 26,5 Y 34,5;   X-26,5 Y 34,5;
X-24,0 Y 39,0;   X 24,0 Y 39,0;   X 21,0 Y 44,0;   X-21,0 Y 44,0;
X-16,5 Y 49,5;   X 16,5 Y 49,5;   X 11,75Y 53,25;  X-11,75Y 53,25
X- 5,9 Y 54,8;   X  5,9 Y 54,8;   X  0,0 Y 55,0;   X-22,0 Y  7,5;
X 22,0 Y  7,5;   X 23,5 Y 12,5;   X-23,5 Y 12,5;   X-23,8 Y 18,1;
X 23,8 Y 18,1;   X 23,0 Y 23,5;   X-23,0 Y 23,5;   X-22,5 Y 29,5;
X 22,5 Y 29,5;   X 20,5 Y 34,5;   X-20,5 Y 34,5;   X-17,7 Y 39,0;
X 17,7 Y 39,0;   X 15,0 Y 43,0;   X-15,0 Y 43,0;   X-11,3 Y 46,0;
X 11,3 Y 46,0;   X  7,2 Y 48,7;   X- 7,2 Y 48,7;   X- 2,5 Y 49,0;
X  2,5 Y 49,0;
```

_Fig 1_

_Fig 2_

_Fig_ 3

_Fig_ 4

Fig 5

Fig 6